# EUROPÄISCHE PATENTSCHRIFT

(11) **EP 3 621 758 B1**
(45) Veröffentlichungstag und Bekanntmachung des Hinweises auf die Patenterteilung: **21.06.2023**
(21) Anmeldenummer: 18739747.6
(22) Anmeldetag: 26.06.2018
(51) Int. Cl.: B22F 3/105, B22F 5/00, B33Y 10/00, B22F 10/366, B22F 10/28

(54) **VERFAHREN FÜR EIN ADDITIV HERZUSTELLENDES BAUTEIL MIT VORBESTIMMTER OBERFLÄCHENSTRUKTUR**
METHOD FOR A COMPONENT WITH A PREDETERMINED SURFACE STRUCTURE TO BE PRODUCED BY ADDITIVE MANUFACTURING
PROCÉDÉ POUR UN ÉLÉMENT À FABRIQUER DE MANIÈRE ADDITIVE PRÉSENTANT UNE STRUCTURE SUPERFICIELLE PRÉDÉFINIE

(30) Priorität: 14.07.2017 DE 102017212110
(43) Veröffentlichungstag der Anmeldung: 18.03.2020
(73) Patentinhaber: Siemens Energy Global GmbH & Co. KG, 81739 München (DE)
(72) Erfinder: GEISEN, Ole, 10781 Berlin (DE)
(86) Internationale Anmeldenummer: PCT/EP2018/067017
(87) Internationale Veröffentlichungsnummer: WO 2019/011641

(56) Entgegenhaltungen:
- WO-A1-2017/007486
- DE-A1-102012 112 350
- JP-A- 2015 139 957
- US-A1- 2016 023 272
- US-A1- 2016 121 551
- US-A1- 2016 144 575
- US-A1- 2017 036 394
- US-A1- 2017 167 274
- US-A1- 2017 197 248

## Beschreibung

Die vorliegende Erfindung betrifft ein Verfahren zum Versehen eines schichtweise oder additiv herzustellenden oder hergestellten Bauteils mit einer vorbestimmten Oberflächenstruktur an einer Seitenfläche. Weiterhin wird ein additives Herstellungsverfahren für das Bauteil angegeben, wobei das Bauteil die vorbestimmte Oberflächenstruktur aufweist. Weiterhin wird ein entsprechendes Computerprogramm vorgestellt.

Das Bauteil ist vorzugsweise für den Einsatz in einer Strömungsmaschine, vorzugsweise im Heißgaspfad einer Gasturbine vorgesehen. Das Bauteil besteht vorzugsweise aus einer Nickelbasis- oder Superlegierung, insbesondere einer nickel- oder kobaltbasierten Superlegierung. Die Legierung kann ausscheidungs-, oder dispersionsgehärtet sein.

Generative oder additive Herstellungsverfahren umfassen beispielsweise als Pulverbettverfahren das selektive Laserschmelzen (SLM) oder Lasersintern (SLS), oder das Elektronenstrahlschmelzen (EBM). Ebenso gehört das Laserauftragschweißen (LMD) zu den additiven Verfahren.

Ein Verfahren zum selektiven Laserschmelzen ist beispielsweise bekannt aus EP 2 601 006 B1.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

Weiterhin ist die additive Fertigung besonders vorteilhaft für die Entwicklung oder Herstellung von Prototypen, welche mittels konventioneller subtraktiver oder spanender Verfahren oder Gusstechnologie nicht oder nicht effizient hergestellt werden können.

Für bestimmte Funktionen des Bauteils, beispielsweise eine Wärmeübertragung oder eine Strömungsführung sind bestimmte Oberflächenbeschaffenheiten, -topologien oder Rauheiten erforderlich oder vorteilhaft. Auch wenn äußere Oberflächen des Bauteils einer Nachbearbeitung zugänglich sind, können insbesondere innenliegende Oberflächen des Bauteils, welche beispielsweise Strömungs- oder Kühlkanäle definieren, nachträglich kaum modifiziert oder hinsichtlich der Rauheit maßgeschneidert werden.

DE 10 2012 112350 A1 offenbart ein Verfahren zur Herstellung eines Substrates mit einer regelmäßig mikrostrukturierten Oberfläche.

Es ist daher Aufgabe der vorliegenden Erfindung, Mittel anzugeben, mit welchen ein Bauteil bereits während seiner additiven Herstellung mit bestimmten Oberflächeneigenschaften, insbesondere einer vorbestimmten Oberflächenstruktur, versehen werden kann, ohne dass eine Nachbearbeitung zum nachträglichen Herstellen einer geforderten Oberflächenstruktur nötig wäre. Insbesondere können durch das beschriebene Verfahren vorteilhafterweise innenliegende Oberflächen des Bauteils mit bestimmten Oberflächeneigenschaften versehen werden.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum Versehen eines schichtweise oder additiv herzustellenden Bauteils mit einer vorbestimmten Oberflächenstruktur an einer Seitenfläche des Bauteils, d. h. einer Fläche oder Ebene parallel zu einer Aufbaurichtung des Bauteils. Die Seitenfläche stellt weiterhin vorzugsweise eine innere und/oder äußere Oberfläche des Bauteils dar. Es kann sich bei der Seitenfläche ferner um eine Stirnseite oder -Fläche des Bauteils handeln.

In einer Ausgestaltung ist das beschriebene Verfahren ein additives Herstellungsverfahren für das Bauteil.

Das Verfahren umfasst das Wählen eines Bestrahlungsmusters zum Verfestigen eines pulverförmigen Ausgangsmaterials für das Bauteil, derart, dass in einer bestimmten Schichtfolge oder Periodizität ein Flächenbestrahlungsvektor und/oder ein Konturbestrahlungsvektor einer zu verfestigenden Bauteilschicht derart eingestellt werden, dass die vorbestimmte Oberflächenstruktur während des schichtweisen Aufbaus entsteht oder gebildet wird.

Der Ausdruck "Kontur" oder "Konturbestrahlungsvektor" stellt vorzugsweise auf einen Rand oder eine Umrandung einer einzelnen aufzubauenden Materialschicht während der Herstellung des Bauteils ab.

Erfindungsgemäß weist die vorbestimmte Oberflächenstruktur eine vorbestimmte oder definierte Oberflächenrauheit auf.

Die Begriffe "Oberflächenrauheit" und "Oberflächenstruktur" können vorliegend synonym verwendet werden.

Erfindungsgemäß ist das beschriebene Verfahren ein CAM-Verfahren bzw. ein Verfahren zur rechnergestützten (additiven) Fertigung.

Ein Vorteil des Verfahrens betrifft insbesondere die Möglichkeit, optimierte oder maßgeschneiderte Oberflächen oder Oberflächenstrukturen in nicht oder schwer zugänglichen Bereichen des Bauteils, beispielsweise an oder in innenliegenden Strömungs- oder Kühlkanälen vorzusehen. Die vorbestimmte Oberflächenstruktur erlaubt es mit Vorteil das Bauteil sowohl innen als auch außen reproduzierbar mit definierten Oberflächeneigenschaften auszustatten, welche der individuelle Einsatz des Bauteils erfordert.

Im Falle von innen liegenden Kanälen kann beispielsweise die Oberflächenstruktur während des additiven Verfahrens so gewählt werden, dass entweder keine Turbulenzen in der Kühlströmung entstehen, oder der Strömung bestimmte Turbulenzen oder Drall gezielt aufzuzwingen, um bestimmte Strömungseigenschaften zu erzielen.

Der Ausdruck "Flächenbestrahlungsvektor" oder Vektor bezeichnet vorliegend vorzugsweise eine Bestrahlung- oder Belichtungstrajektorie oder einen entsprechenden Pfad, gemäß dem ein Energiestrahl, beispielsweise einen Laserstrahl, über das Pulverbett geführt wird, um entsprechendes Pulver selektiv und entsprechend der gewünschten Geometrie des Bauteils zu verfestigen. Der Energiestrahl kann dabei mäanderförmig über das Pulverbett geführt werden, um eine möglichst große Fläche umzuschmelzen und zu verfestigen. Einzelne Bestrahlungsbahnen - welche zu dem Vektor gehören können - sind dabei vorzugsweise nur geringfügig voneinander beabstandet, sodass ein Schmelzbad die gesamte aufzuschmelzende Fläche des Pulverbettes erreicht.

Das "Einstellen" der genannten Vektoren oder Bestrahlungspfade (s.u.) kann standardmäßig und computergestützt durch die Führung einer entsprechenden Bestrahlungs- oder Laseroptik erfolgen.

Der Ausdruck "Konturbestrahlungsvektor" bezeichnet entsprechend vorzugsweise einen Bestrahlungspfad, der lediglich die äußeren Konturen, beispielsweise in Aufsicht auf das Bauteil betrachtet, abdeckt. Sinn solcher Konturfahrten ist es, ein ggf. unzureichendes oder mangelhaftes Bestrahlungs- oder Aufbauergebnis nach jeder aufgebauten Schicht durch eine entsprechende Konturbelichtung zu verbessern.

In einer Ausgestaltung wird der Konturbestrahlungsvektor einer zu verfestigenden Bauteilschicht relativ zu einer vorhergehend aufgebauten Bauteilschicht parallel zu einer Schichtebene versetzt, sodass ein schichtweiser Versatz lediglich von Konturen der Bauteilschicht relativ zu der (vorhergehend) aufgebauten Bauteilschicht von mindestens 10 µm entsteht.

In einer Ausgestaltung wird der Konturbestrahlungsvektor derart gewählt, dass dieser eine Ausbuchtung in dem Bauteil bildet, welche die vorbestimmte Oberflächenstruktur für die entsprechend belichtete Schicht des Bauteils definiert.

In einer Ausgestaltung wird der Flächenbestrahlungsvektor einer zu verfestigenden Bauteilschicht relativ zu einer (nicht unbedingt unmittelbar) vorhergehend aufgebauten Bauteilschicht bzw. des vorhergehend gewählten Flächenbestrahlungsvektor aus, parallel zu einer Schichtebene versetzt, sodass ein schichtweiser oder lateraler Versatz dieser Bauteilschicht relativ zu der vorhergehenden oder vorhergehend aufgebauten und verfestigten Bauteilschicht von mindestens 10 µm entsteht oder gebildet wird.

In einer Ausgestaltung wird der schichtweise Versatz abwechselnd, d.h. beispielsweise entsprechend der gegebenen Schichtfolge oder Periodizität in einer Hin- und einer Rückrichtung, lediglich alle 2, 3, 5, 10, 20, 50 oder 100 Schichten, das heißt mit einer Periodizität von 2, 3, 5, 10, 20, 50 oder 100, während des Aufbaus des Bauteils hergestellt.

Über die Periodizität der schichtweise in den Aufbau eingebrachten Versätze sowie eine entsprechende Versatzlänge kann vorteilhafterweise die vorbestimmte Oberflächenstruktur definiert und reproduzierbar eingestellt werden.

In einer Ausgestaltung wird die vorbestimmte Oberflächenstruktur an einer (im fertig aufgebauten Bauteil) innenliegenden Oberfläche des Bauteils gebildet oder versehen.

In einer Ausgestaltung weist das fertig aufgebaute Bauteil mindestens einen Hohlraum, beispielsweise zur Führung eines Kühlfluides im Betrieb des Bauteils, auf. Der Hohlraum wird entsprechend vorzugsweise zumindest teilweise durch die genannt innen liegende Oberfläche definiert.

Das Verfahren umfasst weiterhin das Bereitstellen von CAD-Daten für das Bauteil, wobei das Bestrahlungsmuster im Rahmen eines CAM-Verfahrens gewählt und auf die CAD-Daten angewendet wird, in dem der Flächenbestrahlungsvektor und/oder der Konturbestrahlungsvektor bei einer Schichtunterteilung, dem sogenannten "Slicen", englisch für "schneiden" oder "unterteilen", berücksichtigt werden.

Offenbart ist auch ein Verfahren zum additiven Aufbauen des Bauteils, wobei der Aufbau des Bauteils auf Basis der Wahl des Bestrahlungsmusters gemäß dem beschriebenen Verfahren durchgeführt wird. Durch das beschriebene additive Herstellungsverfahren kann das Bauteil besonders zweckmäßig als Ganzes oder nur an bestimmten Bereichen gemäß der individuellen Einsatzgebiete des Bauteils mit der vorbestimmten Oberflächenstruktur versehen werden.

In einer Ausgestaltung ist die Oberflächenstruktur eine regelmäßige Oberflächenstruktur. Gemäß dieser Ausgestaltung kann die Oberflächenstruktur oder die Oberflächenrauheit beispielsweise aus regelmäßigen Unebenheiten zusammengesetzt sein.

In einer Ausgestaltung ist die Oberflächenstruktur eine unregelmäßige Oberflächenstruktur.

Offenbart ist auch ein Bauteil, welches gemäß dem beschriebenen Verfahren hergestellt oder herstellbar ist, bzw. auf die beschriebene Art mit der vorbestimmten Oberflächenstruktur versehen wurde und diese entsprechend aufweist.

Ein weiterer Aspekt der vorliegenden Erfindung betrifft ein Computerprogramm, umfassend Befehle oder Programmanweisungen, die bei der Ausführung des Programms durch eine Datenverarbeitungseinrichtung, wie einen Computer, diese veranlassen zumindest den Schritt des Wählens des Bestrahlungsmusters wie beschrieben auszuführen.

In einer Ausgestaltung ist das Computerprogramm, das Computerprogrammprodukt und/oder das computerlesbares Medium ausgebildet, für die Wahl des Bestrahlungsmusters, einen für die jeweilige Anwendung für das Bauteil hinsichtlich seiner Oberflächenstruktur optimalen Flächenbestrahlungsvektor und/oder einen entsprechend optimalen Konturbestrahlungsvektor einer zu verfestigenden Bauteilschicht automatisch einer (Referenz-)Datenbank zu entnehmen und beispielsweise entsprechend in einem CAM-Datensatz zu berücksichtigen.

Ausgestaltungen, Merkmale und/oder Vorteile, die sich vorliegend auf das Verfahren oder das Computerprogramm beziehen, können ferner das Bauteil betreffen oder umgekehrt.

Weitere Einzelheiten der Erfindung werden nachfolgend anhand der Figuren beschrieben.
- Figur 1: zeigt eine schematische Schnittansicht eines additiv herzustellenden Bauteils mit einer erfindungsgemäßen Oberflächenstruktur.
- Figur 2: zeigt eine schematische Schnittansicht des additiv herzustellenden Bauteils gemäß einer alternativen Ausgestaltung.
- Figur 3: zeigt eine schematische Aufsicht des additiv herzustellenden Bauteils.
- Figur 4: zeigt eine schematische Aufsicht des additiv herzustellenden Bauteils gemäß einer alternativen Ausgestaltung.
- Figur 5: zeigt ein schematisches Flussdiagramm, welches Verfahrensschritte des beschriebenen Verfahrens andeutet.

In den Ausführungsbeispielen und Figuren können gleiche oder gleich wirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

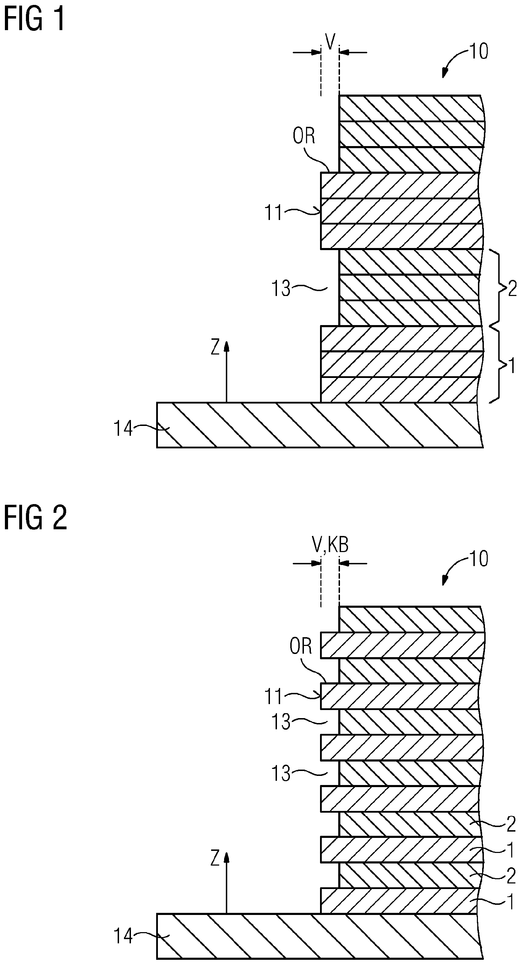

Figur 1 zeigt ein Bauteil 10. Das Bauteil 10 ist vorzugsweise während seiner additiven Herstellung gezeigt, d.h. dass zumindest Teile des Bauteils schichtweise durch ein additives Herstellungsverfahren, beispielsweise selektives Laserschmelzen und/oder Elektronenstrahlschmelzen, verfestigt wurden. Das Bauteil 10 ist mit zwölf entlang einer Aufbaurichtung Z geschichteten Lagen oder Schichten bereits aufgebaut oder verfestigt. Dies erfolgt bei dem beschriebenen Verfahren vorzugsweise selektiv aus einem Pulverbett heraus (nicht explizit gekennzeichnet) und mithilfe eines Laser- oder Elektronenstrahls. Um Spannungen und/oder Verformungen während des selektiven Schmelz- oder Sinterprozesses, welche durch die hohen beteiligten Temperaturgradienten entstehen können, zu vermeiden, wird das Bauteil vorzugsweise stoffschlüssig auf einer Bauplattform 14 aufgebaut.

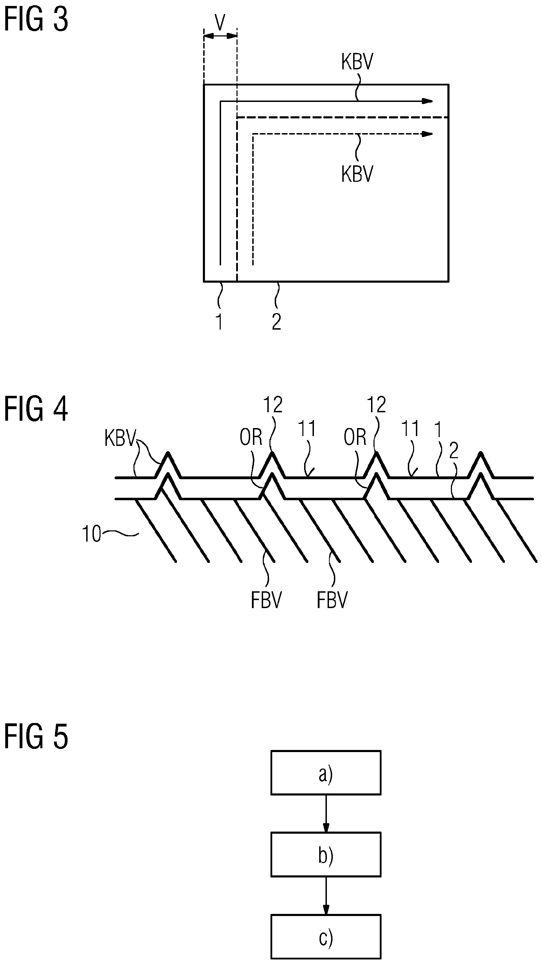

Es ist in Figur 1 zu erkennen, dass das Bauteil 10 mit einer Periodizität von drei Schichten beziehungsweise Schichtdicken durch eine geeignete Wahl des Bestrahlungsmusters mit einem Versatz V versehen wurde. Die ersten drei Schichten (vergleiche Bezugszeichen 1 in Figur 1) des Bauteils 10 sind mit einer ebenen oder bündigen Seitenfläche 11 aufgebaut. Mit anderen Worten wurde eine Bestrahlungsstrategie derart gewählt, dass innerhalb der ersten drei Schichten vorzugsweise kein Versatz V entsteht. Nach der dritten Schicht 1 wurden Konturbestrahlungsvektoren KBV und/oder Flächenbestrahlungsvektoren FBV, insbesondere der vierten Schicht 1 des Bauteils 10 in Figur 1 derart gewählt, dass die vierte, fünfte und sechste Schicht (vergleiche Bezugszeichen 2) um ein Maß entsprechend der Länge V nach rechts versetzt wurden. Die Figur 3 illustriert die Bestrahlung eines Pulverbettes gemäß den Konturbestrahlungsvektoren KBV ("Konturfahrten") des Energiestrahls. Eine solche "Konturfahrt" wird üblicherweise nach einer flächigen Bestrahlung des Pulverbettes (vergleiche Flächenbestrahlungsvektor) durchgeführt, um die Qualität der Pulververfestigung am Rande des Bauteils sicherzustellen und/oder um ein Verfestigungsergebnis am Rande des Bauteils, welcher möglicherweise mechanisch stärker belastet wird als ein innerer Bereich des Bauteils, nachträglich zu verbessern.

Nach dem additiven Aufbau der vierten, fünften und sechsten Schicht, wurde der Konturbestrahlungsvektor der siebenten aufzubauenden Schicht für das Bauteil 10 entsprechend gemäß der Länge V wieder nach links versetzt, sodass ein Zwischenraum 13 gebildet wurde. Durch die so hergestellten schichtweisen Versätze, wird eine Oberflächenstruktur und/oder Oberflächenrauheit OR an der Seitenfläche 11 des Bauteils hergestellt, welche durch Periodizität und Länge der Versätze definiert, eingestellt oder "maßgeschneidert" werden kann. Die Schichten neun bis zwölf des Bauteils 10 sind analog zu den Schichten drei bis sechs wieder nach rechts versetzt.

Oberflächenstruktur OR kann weiterhin durch die Zwischenräume 13 definiert werden. Bei der Oberflächenstruktur kann es sich um eine mittlere Rauheit, quadratische Rauheit, mittlere Rautiefe oder um einen Mittenrauwert handeln.

Die Oberflächenstruktur und/oder die Oberflächenrauheit OR kann ferner regelmäßig oder unregelmäßig sein.

Figur 2 zeigt eine relativ zur Figur 1 alternative Ausgestaltung des Bauteils 10, bzw. deutet ein entsprechend angepasstes erfindungsgemäßes Verfahren an.

Im Unterschied zur Figur 1, wo eine Periodizität von drei gewählt wurde, beträgt die Periodizität oder schichtweise Häufigkeit der Versätze gleich eins. D.h. bei jeder neu aufzubauen Schicht wird in abwechselnder Richtung ein Versatz V der aktuell aufzubauende Schicht relativ zu einer vorhergehend bestrahlten oder aufgebauten Schicht durch eine entsprechende Wahl des Bestrahlungsmusters über die Konturbestrahlungsvektoren, definiert.

Obwohl in den Figuren 1 und 2 lediglich eine Periodizität des schichtweisen Versatz von eins und drei beschrieben ist, ist für den Fachmann klar, dass erfindungsgemäß ebenfalls und entsprechend der gewünschten zu erzielenden Oberflächenstruktur eine Periodizität von 2, 5, 10, 20, 50 oder mehr Schichten gewählt werden kann.

Durch die in den Figuren 1 und 2 illustrierten Mittel der vorliegenden Erfindung, kann die vorbestimmte Oberflächenstruktur OR vorzugsweise kontrolliert und reproduzierbar beispielsweise über die gesamte Seitenfläche 11 des Bauteils 10 hergestellt und für die individuellen Anwendungsgebiete, wie beispielsweise eine Strömungsoptimierung für Kühlluft, im Fall von Turbinenlaufschaufeln, angepasst werden.

Gemäß den Figuren 1 und 2 kann die Länge V des Versatzes 10 pm, 20 µm, vorzugsweise 50 pm oder 100 pm oder mehr, wie beispielsweise 200 oder 300 pm betragen. Gemäß einer für das Bauteil 10 individuell gewünschten Oberflächenstruktur OR kann der Versatz ebenfalls anders gewählt werden.

Figur 3 deutet analog zu den Figuren 1 und 2 die Konturbestrahlung einer Schicht 2 an, welche auf einer zuvor bereits bestrahlten und verfestigten Schicht 1 aufgebaut wird.

Die Verfestigung des Materials über die gesamte Schichtfläche kann hierbei vorzugsweise standardmäßig erfolgen.

Eine Konturbestrahlung erfolgt für die (aktuell aufzubauende) Schicht 2 - im Gegensatz zur darunter bereits verfestigten Schicht 1 - jedoch lediglich weiter innen, um den Versatz V zu generieren.

Die durchgezogenen Linien sowohl für den Rand des Bauteils, als auch für den Konturbestrahlungsvektor KBV beziehen sich auf die Schicht 1 (vergleiche Figuren 1 und 2). Hingegen beschreiben die gestrichelten Linien, sowohl für den Rand des Bauteils als auch für den Konturbestrahlungsvektor KBV, die Schicht 2.

Anders als in den Figuren suggeriert, kann die Seitenfläche 11 des Bauteils eine innenliegende Oberfläche desselben bezeichnen.

Figur 4 deutet eine weitere Möglichkeit an, eine gezielte und vorbestimmte Oberflächenstruktur, beispielsweise an einer Seitenfläche 11 des Bauteils 10, vorzusehen. Zur Verdeutlichung ist eine schematische Aufsicht auf das Bauteil 10 gezeigt. Alternativ oder zusätzlich zu den durch die Konturbestrahlungsvektoren KBV eingebrachten Versätze, kann ein Flächenbestrahlungsvektor FBV schichtweise so variiert werden, dass Ausbuchtungen 12 in der Kontur der jeweils aufgebauten Bauteilschicht entstehen und so die vorbestimmte Oberflächenstruktur OR konfektioniert wird.

Bei den Ausbuchtungen 12 kann es sich um Spitzen handeln. Die Position der Ausbuchtungen oder Spitzen 12 kann weiterhin in jeder Schicht variieren, um beliebige Rauheiten oder Oberflächengeometrieen zu erzeugen.

Die Flächenbestrahlungsvektor FBV sind vorliegend als Schraffur der entsprechend aktuell zu verfestigenden Pulverschicht (in der Schichtebene) angedeutet.

In Figur 4 ist insbesondere eine Situation gezeigt, in der beispielsweise eine vorbestimmte Oberflächenstruktur OR sowohl durch entsprechenden Versatz eines Konturbestrahlungsvektors KBV als auch durch einen schichtweisen Versatz eines Flächenbestrahlungsvektor einer aktuell aufzubauenden Pulverschicht relativ zu einer vorhergehend verfestigten Schicht versetzt wurde.

Diese Beispiele in den Figuren verdeutlichen die Fülle der Freiheitsgrade, welche durch die Variation des Bestrahlungsmusters während der additiven Herstellung, bestehen, um eine definierte Oberflächenstruktur für ein entsprechend hergestelltes Bauteil 10 zu generieren.

Figur 5 deutet ein schematisches Flussdiagramm, umfassend mindestens einen erfindungsgemäßen Verfahrensschritt, an.

Verfahrensschritt a) bezeichnet vorzugsweise das Bereitstellen einer CAD-Datei für das Bauteil. Dabei handelt es sich um Stand der Technik, da das Bereitstellen von Konstruktionsdaten für das Bauteil üblicherweise über eine in eine Herstellungsanlage eingelesene CAD-Datei erfolgt.

Der Verfahrensschritt b) beschreibt vorzugsweise das Wählen des Bestrahlungsmusters wie anhand der vorherigen Figuren beschrieben, nämlich derart, dass das Bauteil 10 mit der vorbestimmten Oberflächenstruktur OR während des additiven Aufbaus versehen wird. Das Bestrahlungsmuster wird im Rahmen eines CAM-Verfahrens gewählt und auf die bestehenden CAD-Daten derart angewendet, dass für den entsprechenden Aufbauprozess in einer additiven Herstellungsanlage, Flächenbestrahlungsvektoren und/oder Konturbestrahlungsvektoren bei einer Schichtunterteilung für den Aufbau des Bauteils, berücksichtigt werden.

Verfahrensschritt b) wird durch ein Computerprogramm durchgeführt.

Verfahrensschritt c) bezeichnet vorzugsweise vorliegend den eigentlichen physischen, additiven Aufbau des Bauteils 10, derart, dass eine Seitenfläche des Bauteils 10 mit der vorbestimmten Oberflächenstruktur OR versehen wird.

Die Erfindung ist nicht durch die Beschreibung anhand der Ausführungsbeispiele auf diese beschränkt, sondern umfasst jedes neue Merkmal sowie jede Kombination von Merkmalen.

## Patentansprüche

1. Verfahren zum Versehen eines schichtweise herzustellenden Bauteils (10) mit einer vorbestimmten Oberflächenstruktur (OR) an einer Seitenfläche (11) des Bauteils (10), das Verfahren umfassend das Bereitstellen von CAD-Daten für das Bauteil (10) und das Wählen eines Bestrahlungsmusters zum Verfestigen eines pulverförmigen Ausgangsmaterials für das Bauteil (10), derart, dass in einer bestimmten Schichtfolge ein Flächenbestrahlungsvektor (FBV) und/oder ein Konturbestrahlungsvektor (KBV) einer zu verfestigenden Bauteilschicht (1,2) derart eingestellt werden, dass die vorbestimmte Oberflächenstruktur (OR) während des schichtweisen Aufbaus entsteht, wobei die vorbestimmte Oberflächenstruktur eine vorbestimmte oder definierte Oberflächenrauheit aufweist, wobei das Bestrahlungsmuster im Rahmen eines CAM-Verfahrens gewählt und auf die CAD-Daten angewendet wird, in dem der Flächenbestrahlungsvektor (FBV) und/oder der Konturbestrahlungsvektor (KBV) bei einer Schichtunterteilung berücksichtigt werden, und wobei
der Konturbestrahlungsvektor (KBV) einer zu verfestigenden Bauteilschicht (2) relativ zu einer vorhergehend aufgebauten Bauteilschicht (1) parallel zu einer Schichtebene versetzt wird, so dass ein schichtweiser Versatz (V) lediglich von Konturen der Bauteilschicht (1) relativ zu der aufgebauten Bauteilschicht (1) von mindestens 10 µm, vorzugsweise mindestens 50 µm, entsteht, und/oder wobei
der Flächenbestrahlungsvektor (FBV) einer zu verfestigenden Bauteilschicht (2) relativ zu einer vorhergehend aufgebauten Bauteilschicht (1) parallel zu einer Schichtebene versetzt wird, so dass ein schichtweiser Versatz (V) dieser Bauteilschicht (2) relativ zu der aufgebauten Bauteilschicht (1) von mindestens 10 um, vorzugsweise mindestens 50 um, entsteht.

2. Verfahren gemäß Anspruch 1, wobei der Konturbestrahlungsvektor (KBV) derart gewählt wird, dass dieser eine Ausbuchtung (12) in dem Bauteil (10) bildet, welche die vorbestimmte Oberflächenstruktur (OR) definiert.

3. Verfahren gemäß einem der vorhergehenden Ansprüche, wobei der schichtweise Versatz (V) abwechselnd lediglich alle 2, 3, 5, 10, 20, 50 oder 100 Schichten hergestellt wird.

4. Verfahren gemäß einem der vorhergehenden Ansprüche, wobei die vorbestimmte Oberflächenstruktur (OR) an einer innenliegenden Oberfläche des Bauteils (10) versehen wird.

5. Computerprogramm, umfassend Befehle, die bei der Ausführung des Programms durch eine Datenverarbeitungseinrichtung, diese veranlassen zumindest den Schritt des Wählens des Bestrahlungsmusters gemäß Anspruch 1 auszuführen.

## Claims

1. Method for providing a component (10) to be produced layerwise with a predetermined surface structure (OR) on a side surface (11) of the component (10), the method comprising the provision of CAD data for the component (10) and the selection of an irradiation pattern for solidifying a starting material in powder form for the component (10), in such a way that a surface irradiation vector (FBV) and/or a contour irradiation vector (KBV) of a component layer (1, 2) to be solidified are adjusted in a particular layer sequence in such a way that the predetermined surface structure (OR) is produced during the layerwise construction, wherein the predetermined surface structure has a predetermined or defined surface roughness, wherein the irradiation pattern is selected in the scope of a CAM method and is applied to the CAD data by the surface irradiation vector (FBV) and/or the contour irradiation vector (KBV) being taken into account during a layer subdivision, and wherein the contour irradiation vector (KBV) of a component layer (2) to be solidified is offset parallel to a layer plane relative to a previously constructed component layer (1), so that a layerwise offset (V) only of contours of the component layer (1) relative to the constructed component layer (1) of at least 10 um, preferably at least 50 um, is produced, and/or wherein the surface irradiation vector (FBV) of a component layer (2) to be solidified is offset parallel to a layer plane relative to a previously constructed component layer (1), so that a layerwise offset (V) of this component layer (2) relative to the constructed component layer (1) of at least 10 um, preferably at least 50 µm, is produced.

2. Method according to Claim 1, wherein the contour irradiation vector (KBV) is selected in such a way that it forms a projection (12) in the component (10), which defines the predetermined surface structure (OR).

3. Method according to either of the preceding claims, wherein the layerwise offset (V) is produced alternately only every 2, 3, 5, 10, 20, 50 or 100 layers.

4. Method according to one of the preceding claims, wherein the predetermined surface structure (OR) is provided on an inner-lying surface of the component (10).

5. Computer program comprising commands which, when the program is run by a data processing device, cause the latter to carry out at least the step of selecting the irradiation pattern according to Claim 1.

## Revendications

1. Procédé pour munir une pièce (10) à fabriquer couche par couche d'une structure (OR) de surface déterminée à l'avance sur une surface (11) latérale de la pièce (10), le procédé comprenant la mise à disposition de données CAD pour la pièce (10) et le choix d'un modèle d'exposition à du rayonnement pour la consolidation d'une matière de départ sous forme de poudre pour la pièce (10), de manière à régler, dans une suite de couches déterminée, un vecteur (FBV) d'exposition en surface et/ou un vecteur (KBV) d'exposition du contour d'une couche (1, 2) de la pièce à consolider, de manière à créer la structure (OR) de surface déterminée à l'avance, pendant la construction couche par couche, dans lequel la structure de surface déterminée à l'avance a une rugosité de surface déterminée à l'avance ou définie, dans lequel on choisit le modèle d'exposition à du rayonnement, dans le cadre d'un procédé CAM, et on l'applique aux données CAD, dans lequel on prend en compte, lors d'une subdivision en couches, le vecteur (FBV) d'exposition en surface et/ou le vecteur (KBV) d'exposition du contour, et dans lequel
on décale, parallèlement à un plan de couche, par rapport à une couche (1) de la pièce construite auparavant, le vecteur (KBV) d'exposition du contour d'une couche (2) de la pièce à consolider, de manière à créer un décalage (V) couche par couche seulement de contours de la couche (1) de la pièce par rapport à la couche (1) de la pièce construite d'au moins 10 um, de préférence d'au moins 50 um, et/ou dans lequel on décale, parallèlement à un plan de couche, par rapport à une couche (1) de la pièce construite auparavant, le vecteur (FBV) d'exposition en surface d'une couche (2) de la pièce à consolider, de manière à créer un décalage (V) couche par couche de cette couche (2) de la pièce par rapport à la couche (1) de la pièce construite, d'au moins 10 um, de préférence d'au moins 50 µm.

2. Procédé suivant la revendication 1, dans lequel on choisit le vecteur (KBV) d'exposition du contour, de manière à ce que celui-ci forme une bosse (12) sortante dans la pièce (10), qui définit la structure (OR) de surface déterminée à l'avance.

3. Procédé suivant l'une des revendications précédentes, dans lequel on produit le décalage (V) couche par couche en alternance seulement toutes les 2, 3, 5, 10, 20, 50 ou 100 couches.

4. Procédé suivant l'une des revendications précédentes, dans lequel on prévoit la structure (OR) de surface déterminée à l'avance sur une surface intérieure de la pièce (10).

5. Programme d'ordinateur comprenant des instructions qui, lors de l'exécution du programme par un dispositif de traitement de données, fait que celui-ci effectue le stade du choix du modèle d'exposition suivant la revendication 1.
